# FASCICULE DE BREVET EUROPEEN

(11) **EP 4 489 874 B1**
(45) Date de publication et mention de la délivrance du brevet: **25.02.2026**
(21) Numéro de dépôt: 23701572.2
(22) Date de dépôt: 27.01.2023
(51) Int. Cl.: A63B 33/00, B63C 11/12, G02C 7/02

(54) **VERRES INCURVÉS POUR VISION SOUS-MARINE AVEC VARIATION D'ÉPAISSEUR**
GEKRÜMMTE LINSEN FÜR UNTERWASSERSICHT MIT UNTERSCHIEDLICHER DICKE
CURVED LENSES FOR UNDERWATER VISION HAVING VARIED THICKNESS

(30) Priorité: 09.03.2022 FR 2202060
(43) Date de publication de la demande: 15.01.2025
(73) Titulaire: Aqualung Corporate, 06560 Valbonne (FR)
(72) Inventeur: BOSIO, Mirko, 06560 Valbonne - Sophia Antipolis (FR); GREGORI, Fabrice, 06560 Valbonne - Sophia Antipolis (FR)
(74) Mandataire: Weinstein Services & Conseils
(86) Numéro de dépôt international: PCT/EP2023/052022
(87) Numéro de publication internationale: WO 2023/169738

(56) Documents cités:
- EP-A1- 0 824 029
- GB-A- 2 330 917
- JP-U- H04 120 764
- US-A- 5 689 323
- US-A- 6 009 564
- US-A1- 2012 127 425
- US-A1- 2016 070 120
- US-A1- 2020 142 218
- US-B1- 6 460 994

## Description

La présente invention concerne des lunettes destinées aux nageurs et aux plongeurs.

Pour une compréhension plus complète de l'invention, il convient de donner au préalable une brève explication en relation avec l'état de la technique dans le domaine général de la vision sous-marine.

Il faut souligner que, dans la présente description et dans les revendications suivantes, le terme « verre » est destiné à désigner précisément le diaphragme optique transparent qui, lors de l'utilisation, sépare l'environnement aqueux du volume d'air compris entre ce diaphragme et le surface du visage de l'utilisateur entourant ses yeux.

Compte tenu de l'état général de la technique relative aux masques et aux lunettes pour nageurs ou plongeurs, les verres sont soit des verres plans, soit des verres cylindriques avec une épaisseur constante.

Il était autrefois commun de penser que la vision dans un système air/ verre / eau n'était possible qu'au travers de verres plats, sous peine de graves distorsions visuelles.

Il est bien connu que le principal problème auquel on doit faire face en vision sous-marine est lié au fait qu'un verre non plan, qui dans l'air ne provoquerait pas de distorsions visibles ou remarquables, sous l'eau constitue au contraire une surface dioptrique en séparant l'eau de l'air (voir fig. 20). Étant donné que l'eau et l'air ont des indices de réfraction assez différents, une courbure ou une configuration prismatique du verre affecte énormément les problèmes de réfraction.

EP0824029 décrit des verres incurvés pour la vision sous-marine. En particulier, en 1998, Technisub (groupe Aqualung) a présenté sur le marché et breveté le masque Seal, le premier masque de natation à verre non plat. Tous les verres ultérieurs produits dans le groupe Aqualung sous la marque Aquasphere, à partir de cette date, sont obtenues à partir de ce profil de verre incurvé. EP0824029 décrit un verre à tendance cylindrique sur l'axe Y, qui représente la verticale du visage et est issue d'une famille de courbes tangentes à l'axe X, à l'horizontale du visage, en d'autres termes il s'agit d'un profil extrudé à rayons mobiles variables. Cette famille de courbes produit un verre caractérisé par un grand rayon de courbure dans la zone centrale (presque plate donc) et par des rayons progressivement plus petits dans les zones externes / latérales.

Les faces du verre, interne et externe, sont toujours strictement parallèles.

On sait que la vision humaine se caractérise par une capacité visuelle optimale dans la zone centrale du champ visuel et une « perception » visuelle dans les zones latérales. La géométrie de ce verre répond donc au besoin d'assurer une bonne vision centrale et une bonne perception latérale et, la variance géométrique particulière étudiée permet de réduire au minimum les distorsions. Elle garantit également une bonne vision sous-marine caractérisée par la perception d'un vaste champ de vision latéral. Cependant, la variation de courbure sur l'axe X provoque une déformation due à l'allongement horizontal des images qui, bien que subjectivement supportable et décodable par le système oeil / cerveau, produit des effets sur la clarté visuelle.

Il faut souligner au préalable que dans ce qui précède et dans ce qui suit, les termes « horizontal » et « vertical », « supérieur » et « inférieur » et similaires sont destinés à se référer, pour la commodité de la description, à l'état porté des lunettes selon l'invention sur le visage d'un utilisateur debout. D'une manière générale, la nouveauté et l'inventivité des lunettes selon l'invention consistent, d'un point de vue conceptuel, en une géométrie particulière capable d'offrir une vision pratiquement non déformée surtout dans les zones où l'oeil humain est organisé pour voir parfaitement (devant, en haut, en bas), tout en reléguant aux deux extrémités latérales la zone de vision la moins parfaite, par une sélection appropriée des secteurs dans lesquels l'appareil visuel n'est pas suffisamment précis pour percevoir des défauts et être ainsi par conséquent perturbé.

### Approche problème-solution :

**L'art antérieur le plus proche** est EP0824029 car il vise le même objet de l'invention à savoir fournir des lunettes de natation ou de plongée adaptées pour assurer lors de l'utilisation une vision totalement panoramique sensiblement sur 180°, dépourvue d'obstacles et sans perturbations optiques importantes (voir [18] de EP0824029 B1).

EP0824029 **décrit** des lunettes dotées de verre d'une épaisseur constante de 1,5 mm et il décrit également que les lunettes conventionnelles sont normalement constituées de verre ayant une épaisseur constante généralement comprise entre 3 mm et 5 mm (voir [14] de EP0824029 B1).

La **différence** entre la présente invention et EP0824029 est que la partie de vision avant cylindrique (3a, 3b) des verres, sur une coupe transversale horizontale, présente une variation d'épaisseur comprise entre 2,0 mm et 4,0 mm, et la partie de vision sphérique latérale (4a, 4b) des verres, sur une coupe transversale horizontale, présente une variation d'épaisseur comprise entre 2,5 mm et 5 mm et qu'il existe une courbure cylindrique sur une coupe transversale verticale de la partie de vision avant cylindrique (3a, 3b), et en ce qu'il existe une courbure sphérique sur une section transversale verticale de la partie de vision sphérique latérale (4a, 4b).

**L'effet technique** fourni par la différence mentionnée ci-dessus est que l'utilisateur des lunettes ne verrait pas d'images déformées et il ne verrait pas non plus d'objets aplatis et dilatés horizontalement (voir tableau 1).

Le **problème technique objectif** de la présente invention est de fournir des verres incurvés adaptés à une vision sous-marine améliorée, c.-à-d. d'éviter une dilatation des images sur l'axe x (horizontal) provoquant une déformation des images et provoquant une perception des objets aplatie et dilatée horizontalement. La présente invention évite les inconvénients mentionnés ci-dessus.

Un objet particulier de l'invention consiste également à fournir des lunettes de natation ou de plongée adaptées pour assurer lors de l'utilisation une vision totalement panoramique sensiblement sur 170°, réduisant radicalement les déformations visuelles sur l'axe horizontal. Un autre objet de la présente invention consiste à améliorer la clarté et la focalisation de la vision sous-marine avec un champ de vision largement étendu. Un autre objet particulier de l'invention consiste à fournir des lunettes de natation ou de plongée qui, grâce à la géométrie particulière du verre, présentent une traînée hydrodynamique extrêmement réduite et une stabilité améliorée sur le visage de l'utilisateur.

La présente invention est **Inventive** par rapport à EP0824029 car EP0824029 **décrit** des lunettes dotées de verres d'une épaisseur constante de 1,5 mm sur l'ensemble du verre, c'est-à-dire sur la partie de vision avant cylindrique et sur la partie de vision sphérique latérale. L'homme du métier ne trouverait aucun avantage dans EP0824029 à utiliser des verres présentant une variation d'épaisseur comprise entre 2,0 mm et 4,0 mm pour la partie de vision avant cylindrique des verres sur une coupe horizontale, et une variation d'épaisseur comprise entre 2,5 mm et 5 mm pour la partie de vision sphérique latérale des verres, sur une coupe horizontale. Les verres incurvés de la présente invention visent à réduire au minimum les aberrations optiques dans la vision sous-marine, en réduisant la déformation horizontale de l'image. L'objectif est atteint en dotant le verre d'une puissance optique correctrice obtenue au moyen d'une variation d'épaisseur sur l'axe horizontal et au moyen d'une légère courbure cylindrique/sphérique sur l'axe vertical.

### Résumé de la présente invention :

La présente invention concerne des lunettes de natation ou de plongée destinées à un utilisateur comprenant :
- une paire de verres symétriques côte à côte (1a, 1b), distincts l'un de l'autre ou formés d'une seule pièce,
- des moyen de contact (9) reliés à étanchéité auxdits verres (1a, 1b) et lors de l'utilisation pour être appliqués de manière étanche à l'eau sur la surface du visage entourant les yeux (E1, E2) d'un utilisateur et lors de l'utilisation lesdits verres (1a, 1b) étant ainsi placés à proximité immédiate de la surface du visage entourant les yeux (E1, E2) de l'utilisateur ;
- des moyens de liaison latéraux (2A, 2A') et des moyens de liaison centraux (2B, 2B') sur lesdits verres (1a, 1b), qui fixent lesdits moyens de contact (9) auxdits verres (1a, 1b) ;
- lesdits moyens de contact (9) sont fixés auxdits verres (1a, 1b) par lesdits moyens de liaison latéraux (2A, 2A') et centraux (2B, 2B') ;
- un moyen de retenue (11) des lunettes derrière la tête de l'utilisateur ;
- chaque verre (1a, 1b) présentant, en référence à l'oeil respectif (E1, E2) d'un utilisateur, une surface interne (10A) et une surface externe (10B) ;
- chaque verre (1a, 1b) présentant, en référence à l'œil respectif (E1, E2) d'un utilisateur, une partie de vision avant cylindrique (3a, 3b) et une partie de vision sphérique latérale (4a, 4b),
caractérisée par la combinaison suivante de caractéristiques :
- la partie de vision avant cylindrique (3a, 3b), sur une section transversale horizontale du verre (1a, 1b), présente une variation d'épaisseur comprise entre 2,0 mm et 4,0 mm, et
- la partie de vision sphérique latérale (4a, 4b), sur une section transversale horizontale du verre (1a, 1b), présente une variation d'épaisseur comprise entre 2,5 mm et 5 mm, et
- les verres (1a, 1b) présentent une courbure cylindrique sur une section transversale verticale du verre (1a, 1b) de la partie de vision avant cylindrique (3a, 3b), et
- les verres (1a, 1b) présentent une courbure sphérique sur une section transversale verticale du verre (1a, 1b) de la partie de vision sphérique latérale (4a, 4b).

La surface externe du verre est la surface en contact avec l'eau et la surface interne du verre est la surface en contact avec l'air à l'intérieur des lunettes de natation ou de plongée.

De préférence, la partie de vision avant cylindrique (3a, 3b), sur la section transversale horizontale, présente une variation d'épaisseur comprise entre 2,0 mm et 3,1 mm et la partie de vision sphérique latérale (4a, 4b), sur la section transversale horizontale, présente une variation d'épaisseur comprise entre 2,5 mm et 4 mm.

De préférence, la partie de vision avant cylindrique (3a, 3b), sur la section transversale horizontale, présente une variation d'épaisseur comprise entre 2,5 mm et 3,1 mm et la partie de vision sphérique latérale (4a, 4b), sur la section transversale horizontale, présente une variation d'épaisseur comprise entre 3,1 mm et 4 mm.

De préférence, la partie de vision avant cylindrique (3a, 3b), sur la section transversale horizontale, présente une variation d'épaisseur comprise entre 3,0 mm et 4,0 mm et la partie de vision sphérique latérale (4a, 4b), sur la section transversale horizontale, présente une variation d'épaisseur comprise entre 4,0 mm et 5 mm.

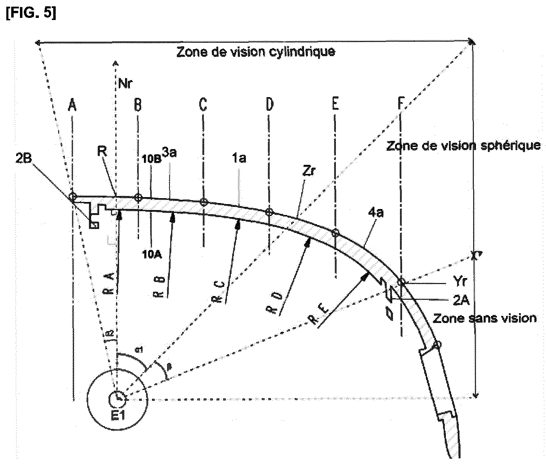

De préférence, un rayon visuel (Nr) sort des yeux (E1, E2) de l'utilisateur dans un plan horizontal, ledit rayon visuel (Nr) étant contenu dans un plan vertical perpendiculaire audit plan horizontal, ledit rayon visuel (Nr) frappe la surface externe (10B) du verre (1a) en un premier point (R) de celle-ci dans lequel ledit rayon visuel (Nr) est perpendiculaire à la surface interne (10A) de la partie de vision avant cylindrique (3a) du verre (1a), et une première zone de ladite partie de vision avant **cylindrique** (3a) est définie par un angle alpha1 entre ledit premier point (R) et un second point (Zr) pour l'oeil (E1, E2), ledit second point (Zr) correspondant à un point de la surface externe du verre (1a) situé au niveau de l'extrémité latérale de la partie de vision avant cylindrique (3a), ledit angle **alpha1** étant compris entre 45° et 50° par rapport à un côté dudit plan vertical et une deuxième zone de ladite partie de vision avant **cylindrique** (3a) est définie par un angle **alpha2** entre ledit premier point (R) et les moyens de liaison centraux (2B, 2B') pour l'oeil (E1, E2), ledit angle alpha2 étant compris entre 10° et 15° par rapport audit plan vertical, et ledit angle alpha2 étant contenu sur le côté opposé, par rapport audit plan vertical, à celui contenant ledit angle alpha1 (voir figure 5).

De préférence, la partie de vision sphérique latérale (4a) du verre (1a) est définie par une troisième zone présentant un angle bêta commençant immédiatement après un point (Zr), ledit point (Zr) correspondant à un point de la surface externe du verre (1a) situé au niveau de l'extrémité latérale de la partie de vision avant cylindrique (3a, 3b), et ladite troisième zone se terminant au niveau des moyens de liaison latéraux (2A, 2A') sur ledit verre (1a) pour l'oeil (E1, E2), ledit angle bêta étant compris entre 10° et 20° (voir figure 5).

De préférence, un rayon visuel sortant des yeux (E1, E2) de l'utilisateur et traversant la partie de vision sphérique latérale (4a, 4b) dans un plan horizontal, a un angle divergent inférieur ou égal à 5° avec par rapport à un plan de symétrie vertical du verre (1a, 1b).

De préférence, la partie de vision avant cylindrique (3a) du verre (1a) est symétrique à la partie de vision avant cylindrique (3b) du verre (1b).

De préférence, la partie de vision sphérique latérale (4a) du verre (1a) est symétrique à la partie de vision sphérique latérale (4b) du verre (1b).

De préférence, la surface interne (10A) et la surface externe (10B) du verre (1a, 1b) ne sont pas parallèles mais se coupent.

La présente invention concerne également des lunettes de natation ou de plongée susceptibles d'être obtenues selon le procédé comprenant les étapes consistant à :
- doter le verre d'une puissance optique correctrice obtenue au moyen d'une variation d'épaisseur selon l'axe horizontal, et
- produire une courbure cylindrique/sphérique sur l'axe vertical.

### Dessins et leur brève description :

Les caractéristiques et avantages de l'invention apparaîtront au travers de la description détaillée, faite en référence aux dessins annexés donnés uniquement à titre d'exemple non limitatif, dans lesquels :
[Fig. 1] est une vue schématique montrant de manière simplifiée la structure essentielle d'un verre. Elle montre en particulier la position de la spline A (section médiane horizontale de la surface interne du verre) et de la spline B (section médiane horizontale de la surface externe du verre).
[Fig. 2] est une vue schématique en coupe horizontale montrant de manière simplifiée la structure essentielle d'un verre. Elle
   montre en particulier un détail de la section médiane horizontale de la surface interne et des arcs RA, RB, RC, RD, RE qui forment la spline A.
[Fig. 3] est une vue schématique en coupe horizontale montrant de manière simplifiée la structure essentielle d'un verre. Elle montre en particulier un détail de la section médiane horizontale de la surface externe et des arcs RA, RB, RC, RD, RE et RF qui forment la spline B.
[Fig. 4] est une vue schématique montrant de manière simplifiée la structure essentielle d'un verre. Elle montre notamment un détail des sections transversales verticales des verres. Les sections verticales A à F sur l'axe vertical sont des arcs à rayon variable. Ils sont « suspendus » à la spline A de référence qui détermine l'axe horizontal du verre. La spline A représente la quille du navire, les sections A à F représentent les nervures, ensemble elles définissent la forme du verre.
[Fig. 5] est une vue schématique en coupe horizontale montrant de manière simplifiée la structure essentielle du verre droit (1a) (œil E1). Elle montre notamment la zone de vision cylindrique (angle alpha1 et alpha2), la zone de vision sphérique (angle bêta) et la zone de non vision latérale. Le rayon Nr issu de l'oeil E1 est perpendiculaire au verre (1a).

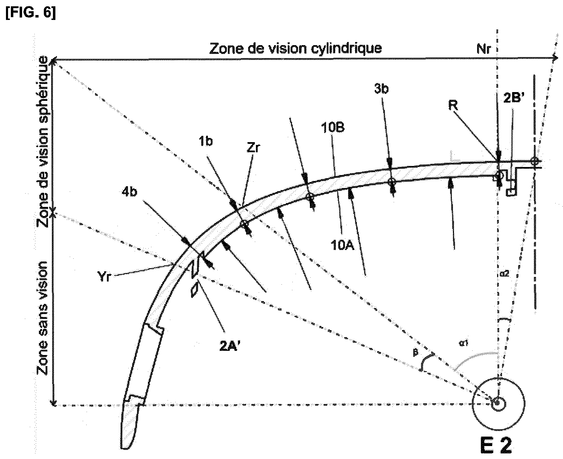

[Fig. 6] est une vue schématique en coupe horizontale montrant de manière simplifiée la structure essentielle du verre gauche (1b) (œil E2). Elle montre notamment la zone de vision cylindrique (angle alpha1 et angle alpha2), la zone de vision sphérique (angle bêta) et la zone de non vision latérale. Le rayon Nr issu de l'oeil E2 est perpendiculaire au verre (1b).

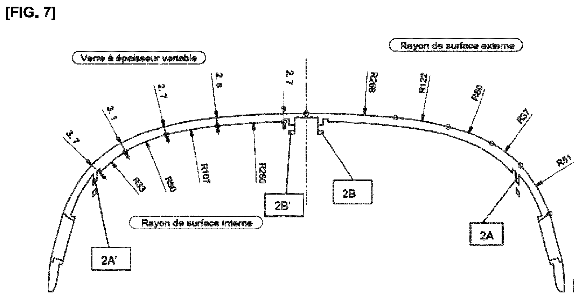

[Fig. 7] est une vue schématique en coupe horizontale montrant de manière simplifiée la structure essentielle des deux verres. Elle montre l'épaisseur variable des verres (1a, 1b) avec certaines valeurs d'épaisseur spécifiques en mm. La partie gauche de la figure montre la variance des rayons internes. Le profil est constitué d'une famille de rayons variables parfaitement tangents les uns aux autres. Les dimensions décrivent la variation d'épaisseur qui augmente progressivement dans les zones périphériques. L'effet de cette variation est l'amélioration de la vision sous-marine, c.-à-d. la réduction de la déformation des images perçues sur le champ visuel horizontal. La partie droite de la figure décrit la variance des rayons externes. Le profil est composé d'une famille de rayons variables parfaitement tangents les uns aux autres.

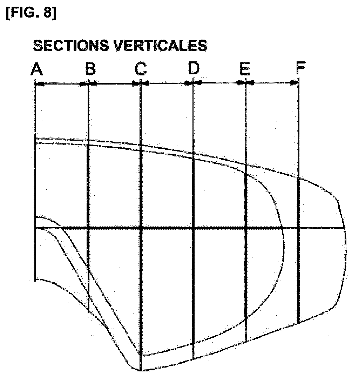

[Fig. 8] est une vue schématique montrant de manière simplifiée la structure essentielle d'un verre. Elle montre un détail du positionnement des sections transversales verticales du verre et de l'espacement régulier.

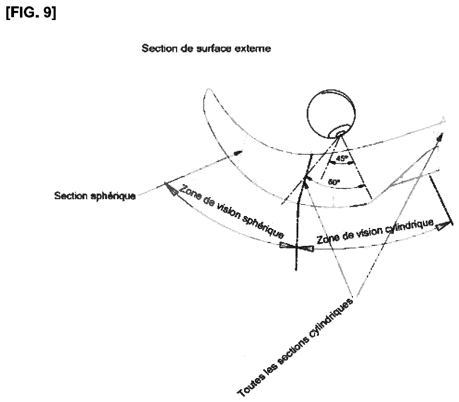

[Fig. 9] est une vue schématique montrant de manière simplifiée la structure essentielle d'un verre. Cette figure décrit la forme du verre par rapport à la capacité de perception de l'oeil humain. La zone centrale du champ visuel, étendue d'environ 60° horizontalement, est celle responsable de la vision claire des objets. Dans cette zone, la courbure du verre est réduite au minimum. La zone latérale du champ visuel est celle dans laquelle l'oeil humain perçoit mais ne voit pas avec précision. Cette zone du verre s'appelle la zone de vision sphérique.

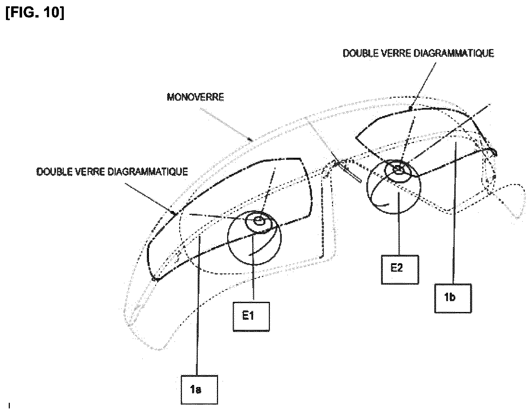

[Fig. 10] est une vue schématique montrant de manière simplifiée la structure essentielle d'un verre. Elle montre le cas d'une structure à double verre.

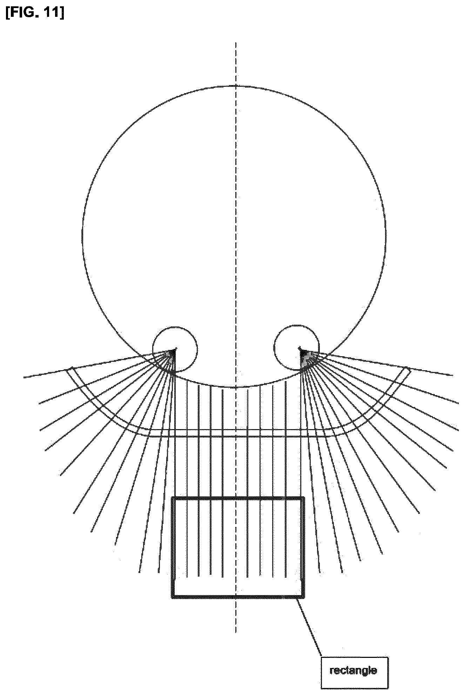

[Fig. 11] montre comment un objet à visualiser et à placer à 1 mètre du masque, c.-à-d. un objet carré en réalité est perçu sous l'eau avec les lunettes de la technique antérieure EP0824029, c.-à-d. sous la forme d'un rectangle.

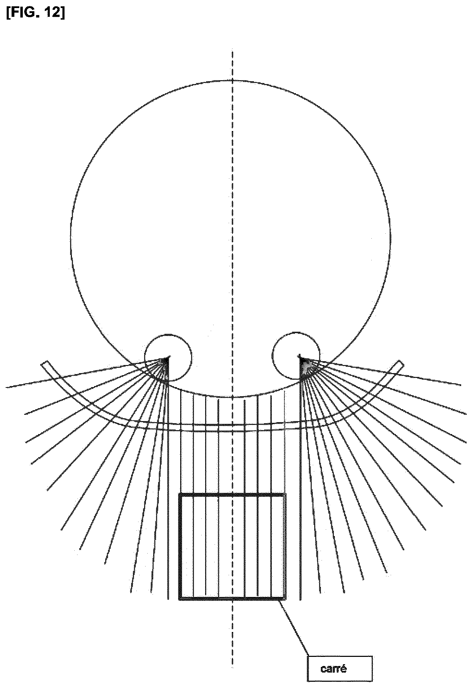

[Fig. 12] montre comment un objet à visualiser et à placer à 1 mètre des lunettes, c'est-à-dire un objet carré en réalité, est perçu sous l'eau avec les lunettes de la présente invention, c'est-à-dire sous la forme d'un carré. L'objet à visualiser ne subit pas de changement de forme.

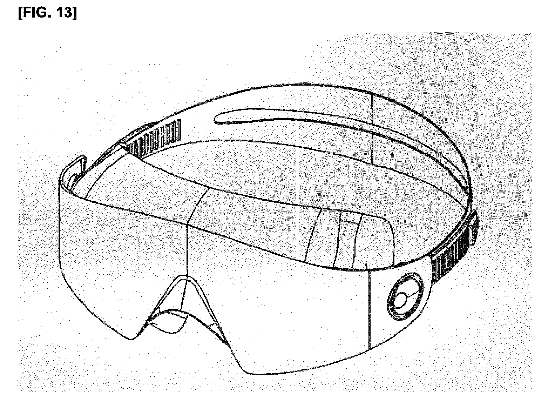

[Fig. 13] montre une vue avant droite en perspective des lunettes de natation de la présente invention.

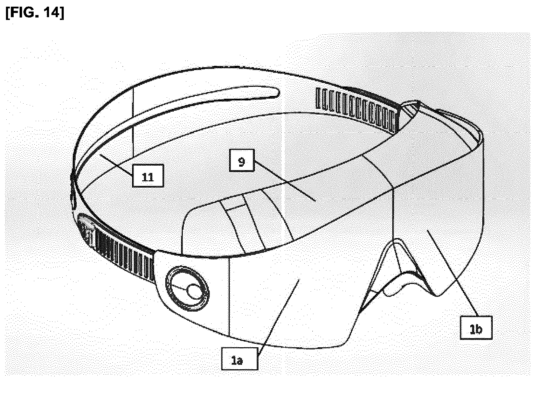

[Fig. 14] montre une vue avant gauche en perspective des lunettes de natation de la présente invention.

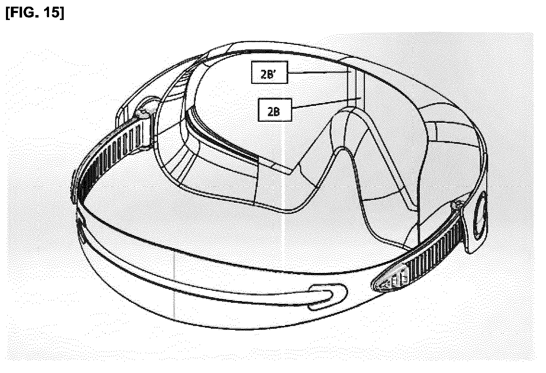

[Fig. 15] montre une vue arrière droite en perspective des lunettes de natation de la présente invention.

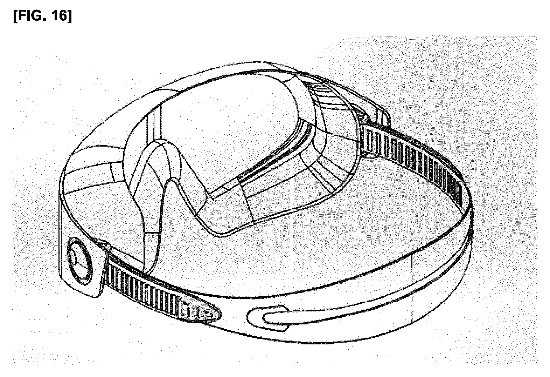

[Fig. 16] montre une vue arrière gauche en perspective des lunettes de natation de la présente invention.

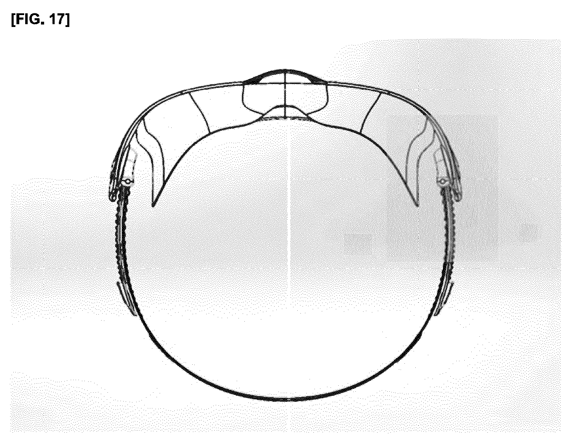

[Fig. 17] montre une vue de dessous des lunettes de natation de la présente invention.

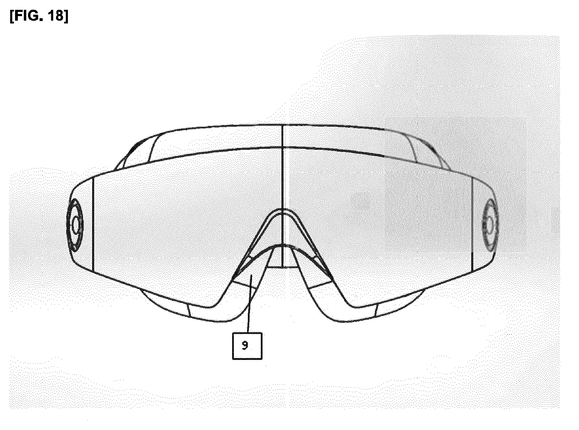

[Fig. 18] montre une vue de face des lunettes de natation de la présente invention.

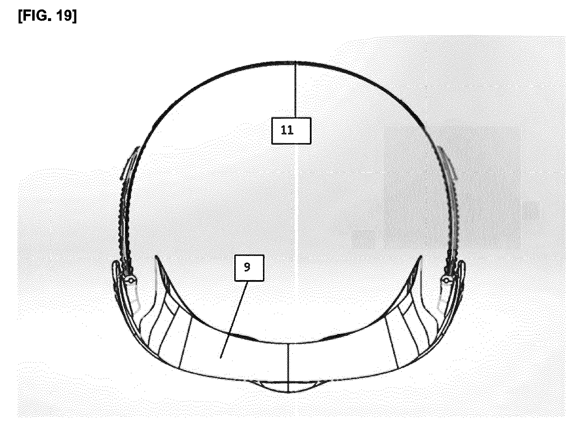

[Fig. 19] montre une vue de dessus des lunettes de natation de la présente invention.

### Description détaillée de l'invention :

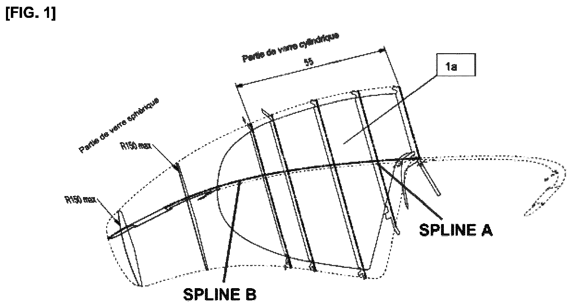

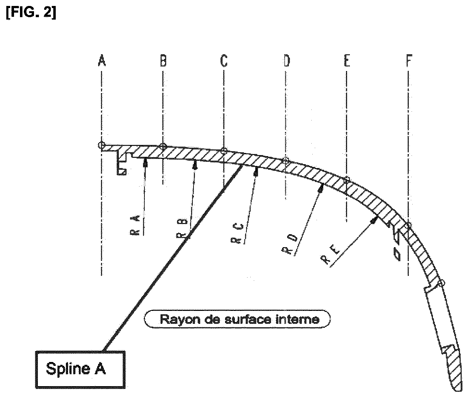

Le verre de la présente invention consiste en :
une surface **interne** (10A) faisant face au côté image et lors de l'utilisation des lunettes en contact avec **l'air** contenu à l'intérieur des lunettes. La surface interne (10A) du verre présente, au niveau de sa section médiane horizontale, une spline A (voir Figure 1) composée d'arcs RA, RB, RC, RD, RE tangents les uns aux autres (Figure 2), étant RA=360±40 mm, RB=220±20 mm, RC=115±15 mm, RD=55±5 mm, RE=33±3 mm.

Le point de transition de RA à RB est situé à 14 mm du plan de symétrie vertical du verre, le point de transition de RB à RC est situé à 28 mm du plan de symétrie vertical du verre, le point de transition de RD à RC est situé à 42 mm de plan de symétrie vertical du verre et le point de transition de RD à RE est situé à 56 mm du plan de symétrie vertical du verre.

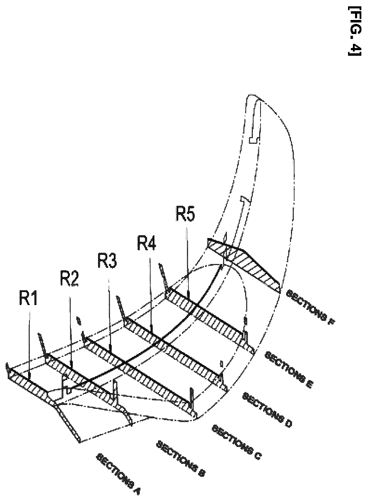

La géométrie de la surface interne du verre est générée (figure 4) par une succession de sections A, B, C, D, E, F disposées sur la spline A, la section A étant positionnée sur le plan de symétrie vertical du verre, la section B étant positionnée sur le point de transition de RA à RB, la section C étant positionnée sur le point de transition de RB à RC, la section D étant positionnée sur le point de transition de RD à RC, la section E étant positionnée sur le point de transition de RE à RD et la section F étant distante de 14 mm de la section E.

Chaque section a un profil interne qui est un arc avec un rayon R1, R2, R3, R4, R5 différent :
R1= 7100±700 mm, R2= 6950±690 mm, R3= 7000±700 mm, R4= 7100±700 mm, R5= 6900±690 mm.

Une surface **externe** (10B) faisant face au côté objet et lors de l'utilisation des lunettes en contact avec de **l'eau** à l'extérieur des lunettes. La surface externe présente au niveau de sa section médiane horizontale une spline B (Figure 1) non parallèle à la spline A.

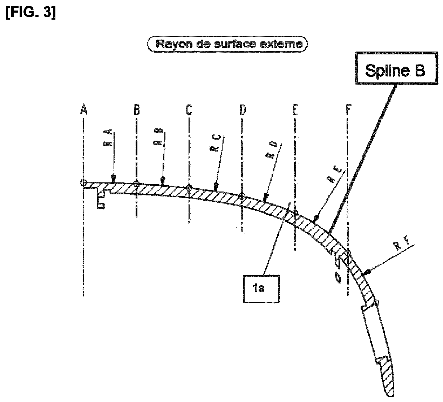

La spline B est composée d'arcs RA, RB, RC, RD, RE tangents les uns aux autres (voir Figure 3) étant RA=270±30 mm, RB=270±30 mm, RC=120±20 mm, RD=60±10 mm, RE=35±5 mm. Le point de transition de RA à RB est situé à 14 mm du plan de symétrie vertical du verre, le point de transition de RB à RC est situé à 28 mm du plan de symétrie vertical du verre, le point de transition de RD à RC est situé à 42 mm de plan de symétrie vertical du verre, le point de transition de RD à RE est situé à 56 mm du plan de symétrie vertical du verre, et le point de transition de RE à RF est situé à 70 mm du plan de symétrie vertical du verre.

La géométrie de la surface externe du verre est générée (voir Figure 4) par une succession de sections A, B, C, D, E, F disposées sur la spline B, la section A étant positionnée sur le plan de symétrie vertical du verre, la section B étant positionnée sur le point de transition de RA à RB, le section C étant positionnée sur le point de transition de RB à RC, la section D étant positionnée sur le point de transition de RD à RC, la section E étant positionnée sur le point de transition de RE à RD et la section F étant distante de 14 mm de la section E. Les sections A, B, C, D, E et F ont un profil extérieur qui est une ligne droite. Au-delà de la section F, qui est désormais hors du champ visuel, le profil vertical de la surface externe peut être complété en se poursuivant par des arcs d'une valeur de rayon de courbure supérieure ou égale à 50 mm.

Par conséquent, les surfaces interne (10A) et externe (10B) du verre ne sont PAS parallèles. La courbe interne du verre est en effet calculée de manière à réduire les déformations latérales.

L'objectif a été atteint en donnant une puissance optique correctrice au verre, obtenue par des zones à épaississement progressif le long de la ligne horizontale. Cette variation a été calculée non pas dans l'air, comme dans les verres correcteurs courants, mais dans le système optique d'utilisation réelle, c'est-à-dire l'air, contenu dans le masque / les lunettes, le verre, l'eau dans l'environnement extérieur.

De cette façon, le verre est généré pour avoir dans l'eau une puissance optique nulle et n'est donc pas conçu comme un verre correcteur, une caractéristique des verres prescrits sur ordonnance, mais comme un verre conçu pour réduire les déformations dues au caractère courbe en lien avec la présence du prisme optique constitué de la masse d'eau.

La géométrie du verre est donc cylindrique dans la zone de vision pour réduire au minimum la déformation le long de l'axe horizontal et sphérique dans la zone latérale pour optimiser la perception.

Cette solution optique/géométrique particulière est applicable aussi bien au cas d'un seul verre qu'au cas de deux verres différenciés. Dans l'hypothèse de deux verres, ceux-ci seront taillés dans la même surface décrite dans le présent brevet, en respectant l'écart pupillaire. La partie du verre utilisée par le masque ou la lunette à deux verres différenciés doit se trouver dans la position exacte respectant les centres optiques du verre unique.

À commencer par la géométrie du verre éprouvée, décrite précédemment, l'objet de l'invention est de proposer un verre toujours constitué d'une famille de rayons variables sur l'axe X mais caractérisée par les critères innovants suivants :
1) Les surfaces interne (10A) / externe (10B) du verre ne sont PAS parallèles. La courbe interne du verre est en effet calculée de manière à réduire les déformations latérales. L'objectif a été atteint en donnant une puissance optique correctrice au verre, obtenue par des zones à épaississement progressif le long de la ligne horizontale.
2) Sachant que, comme indiqué précédemment, une variation de courbure sur l'axe X (horizontal) détermine une déformation due à l'allongement horizontal des images. Pour limiter cette déformation, une sphéricité interne a également été introduite dans l'axe Y (vertical).

Par conséquent, la surface interne (10A) est générée par une spline horizontale, constituée de courbes composées parfaitement tangentes et d'une cambrure verticale qui s'étend avec un parcours fixe au-dessus de la spline horizontale susmentionnée qui ne s'étend pas parallèlement à la spline externe et des sections verticales sphériques variables. Ces sections verticales courbes sont également variables et partent d'un rayon de 7 100 mm dans la zone centrale pour atteindre 10 000 mm dans la zone latérale.

La surface du verre intérieur peut donc être décrite comme la coque d'un navire. Il existe une ligne horizontale qui constitue la quille et des nervures courbes normales à celle-ci. Ce système de courbes est le cadre sur lequel la surface du verre intérieur est construite.

### Procédé de fabrication :

Les verres sont réalisés par moulage par injection de thermoplastique, puis ils sont assemblés avec un système de montures rigides et de jupe en silicone, ou cette dernière est directement surmoulée sur le verre.

**[Tableau 1] : comparaison de la présente invention avec l'état de la technique le plus proche:**

| | **Épaisseur (mm) de la zone de vision cylindrique en coupe horizontale (à mi-hauteur)** | **Épaisseur (mm) de la zone de vision sphérique en coupe horizontale (à mi-hauteur)** | **Angle de divergence dans l'eau par rapport à un plan vertical (dans la zone de vision cylindrique)** | **Perception d'un objet carré dans l'eau (à une distance de 1 mètre des lunettes)** |
|---|---|---|---|---|
| **Lunettes de EP0824029 (technique antérieure la plus proche)** | 1,5 (constante) | 1,5 (constante) | 15° voir [0037] | Rectangulaire |
| **Lunettes de protection selon la présente invention (revendication 1 telle que déposée)** | variable de 2,0 à 4,0 | variable de 2,5 à 5,0 | <= 5° | Carré |
| **Lunettes de protection selon la présente invention (revendication 2 telle que déposée)** | variable de 2,0 à 3,1 | variable de 2,5 à 4,0 | <= 5° | Carré |
| **Lunettes de protection selon la présente invention (revendication 3 telle que déposée)** | variable de 2,5 à 3,1 | variable de 3,1 à 4,0 | <= 5° | Carré |
| **Lunettes de protection selon la présente invention (revendication 4 telle que déposée)** | variable de 3,0 à 4,0 | variable de 4,0 à 5,0 | <= 5° | Carré |

L'homme du métier serait surpris d'apprendre que la perception d'un objet carré dans l'eau ne serait pas modifiée avec les lunettes de la présente invention (c'est-à-dire pas d'objet déformé, pas d'objet aplati et pas d'objet dilaté horizontalement), alors que la perception d'un objet carré dans l'eau avec les lunettes de EP0824029 montrerait un rectangle au lieu d'un carré. Pour obtenir cet effet surprenant, il est nécessaire d'utiliser une épaisseur variable de 2,0 à 4,0 mm de la zone cylindrique en coupe horizontale (à mi-hauteur) combinée à l'utilisation d'une épaisseur variable de 2,5 à 5,0 mm de la zone sphérique latérale en coupe horizontale (à mi-hauteur), mais idéalement d'utiliser une épaisseur variable de 2,5 à 3,1 mm de la zone cylindrique en coupe horizontale (à mi-hauteur) combinée à une épaisseur variable de 3,1 à 4,0 mm de la zone sphérique latérale en coupe horizontale (à mi-hauteur), toutes les plages précitées doivent être combinées à une sphéricité interne introduite dans l'axe Y (vertical) des verres.

Les caractéristiques techniques mentionnées ci-dessus impliquent une activité inventive.

La partie de vision avant **cylindrique** (3a,3b), sur une coupe transversale horizontale, peut également avoir une variation d'épaisseur comprise entre 2,0 mm et 3,1 mm, ou entre 2,1 mm et 3,1 mm ou entre 2,2 mm et 3,1 mm ou entre 2,3 mm et 3,1 mm ou entre 2,4 mm et 3,1 mm ou entre 2,5 mm et 3,1 mm ou entre 2,6 mm et 3,1 mm ou entre 2,7 mm et 3,1 mm ou entre 2,8 mm et 3,1 mm ou entre 2,9 mm et 3,1 mm, ou entre 2,0 mm et 3,0 mm, ou entre 2,1 mm et 2,9 mm ou entre 2,2 mm et 2,8 mm ou entre 2,3 mm et 2,7 mm ou entre 2,4 mm et 2,6 mm ou entre 2,5 mm et 3,0 mm ou entre 2,6 mm et 3,0 mm ou entre 2,7 mm et 3,0 mm ou entre 2,8 mm et 3,0 mm ou entre 2,9 mm et 3,0 mm, ou entre 2,1 mm et 3,9 mm, ou entre 2,2 mm et 3,8 mm, ou entre 2,3 mm et 3,7 mm, ou entre 2,4 mm et 3,6 mm, ou entre 2,5 mm et 3,5 mm, ou entre 2,6 mm et 3,4 mm, ou entre 2,7 mm et 3,3 mm, ou entre 2,8 mm et 3,2 mm, ou entre 2,9 mm et 3,1 mm et
la partie de vision **sphérique** latérale (4a, 4b), sur une coupe horizontale, peut également avoir une variation d'épaisseur comprise entre 3,1 mm et 3,7 mm ou 3,1 mm et 4 mm, ou entre 3,2 mm et 4 mm ou entre 3,3 mm et 4 mm ou entre 3,4 mm et 4 mm ou entre 3,5 mm et 4 mm ou entre 3,6 mm et 4 mm ou entre 3,7 mm et 4 mm ou entre 3,8 mm et 4 mm ou entre 3,9 mm et 4 mm ou entre 3,1 mm et 3,9 mm, ou entre 3,2 mm et 3,8 mm ou entre 3,3 mm et 3,7 mm ou entre 3,4 mm et 3,6 mm ou entre 3,5 mm et 3,9 mm ou entre 3,6 mm et 3,9 mm ou entre 3,7 mm et 3,9 mm ou entre 3,1 mm et 3,9 mm ou entre 3,1 mm et 3,8 mm, ou entre 2,5 mm et 5,0 mm, ou entre 2,6 mm et 4,9 mm, ou entre 2,7 mm et 4,8 mm, ou entre 2,8 mm et 4,7 mm, ou entre 2,9 mm et 4,6 mm, ou entre 2,8 mm et 4,5 mm, ou entre 2,9 mm et 4,4 mm, ou entre 3,0 mm et 4,3 mm, ou entre 3,1 mm et 4,2 mm, ou entre 3,2 mm et 4,2 mm, ou entre 3,3 mm et 4,2 mm, ou entre 3,4 mm et 4,1 mm, ou entre 3,5 mm et 4,0 mm, ou entre 3,6 mm et 3,9 mm, ou entre 3,7 mm et 3,8 mm.

Toute plage, précédemment mentionnée, concernant la partie de vision avant **cylindrique** (3a, 3b) peut être combinée avec toute plage, précédemment mentionnée, de la partie de vue **sphérique** latérale (4a, 4b).

## Revendications

1. Lunettes de natation ou de plongée destinée à un utilisateur comprenant :
- une paire de verres symétriques côte à côte (1a, 1b), distincts l'un de l'autre ou formés d'une seule pièce,
- des moyens de contact (9) reliés à étanchéité auxdits verres (1a, 1b) et adaptés pour être appliqués de manière étanche à l'eau sur la surface du visage entourant les yeux (E1, E2) de l'utilisateur et, lors de l'utilisation, lesdits verres (1a, 1b) étant ainsi placés à proximité immédiate de la surface du visage entourant les yeux (E1, E2) de l'utilisateur ;
- des moyens de liaison latéraux (2A, 2A') et des moyens de liaison centraux (2B, 2B') sur lesdits verres (1a, 1b), qui fixent lesdits moyens de contact (9) auxdits verres (1a, 1b) ;
- lesdits moyens de contact (9) sont fixés auxdits verres (1a, 1b) par lesdits moyens de liaison latéraux (2A, 2A') et centraux (2B, 2B') ;
- un moyen de retenue (11) des lunettes derrière la tête de l'utilisateur ;
- chaque verre (1a, 1b) présente, en référence à un œil respectif de l'utilisateur (E1, E2), une surface interne (10A) et une surface externe (10B),
- chaque verre (1a, 1b) ayant, en référence à l'oeil respectif de l'utilisateur (E1, E2), une partie de vision avant cylindrique (3a, 3b) et une partie de vision sphérique latérale (4a, 4b),
**caractérisées en ce que** :
- la partie de vision avant cylindrique (3a, 3b), sur une section transversale horizontale du verre (1a, 1b), présente une variation d'épaisseur comprise entre **2,0 mm et 4,0 mm,** et
- la partie de vision sphérique latérale (4a, 4b), sur une coupe transversale horizontale du verre (1a, 1b), présente une variation d'épaisseur comprise entre **2,5 mm et 5,0 mm,** et
- les verres (1a, 1b) présentent une courbure cylindrique sur une section transversale verticale du verre (1a, 1b) de la partie de vision avant cylindrique (3a, 3b), et
les verres (1a, 1b) présentent une courbure sphérique sur une section transversale verticale du verre (1a, 1b) de la partie de vision sphérique latérale (4a, 4b).

2. Lunettes de natation ou de plongée selon la revendication 1, dans lesquelles la partie de vision avant cylindrique (3a, 3b), sur la section transversale horizontale, présente une variation d'épaisseur comprise entre **2,0 mm et 3,1 mm** et la partie de vision sphérique latérale (4a, 4b), sur la section transversale horizontale, présente une variation d'épaisseur comprise entre **2,5 mm et 4,0 mm.**

3. Lunettes de natation ou de plongée selon la revendication 1, dans lesquelles la partie de vision avant cylindrique (3a, 3b), sur la section transversale horizontale, présente une variation d'épaisseur comprise entre **2,5 mm et 3,1 mm** et la partie de vision sphérique latérale (4a, 4b), sur la section transversale horizontale, présente une variation d'épaisseur comprise entre **3,1 mm et 4,0 mm.**

4. Lunettes de natation ou de plongée selon la revendication 1, dans lesquelles la partie de vision avant cylindrique (3a, 3b), sur la section transversale horizontale, présente une variation d'épaisseur comprise entre **3,0 mm et 4,0 mm** et la partie de vision sphérique latérale (4a, 4b), sur la section transversale horizontale, présente une variation d'épaisseur comprise entre **4,0 mm et 5,0 mm.**

5. Lunettes de natation ou de plongée selon la revendication 1, dans lesquelles un rayon visuel (Nr) sort de l'un des yeux (E1, E2) de l'utilisateur dans un plan horizontal, ledit rayon visuel (Nr) étant contenu dans un plan vertical perpendiculaire audit plan horizontal, ledit rayon visuel (Nr) frappe la surface externe (10B) du verre (1a) en un premier point (R) de celle-ci dans lequel ledit rayon visuel (Nr) est perpendiculaire à la surface interne (10A) de la partie de vision avant cylindrique (3a) du verre (1a), et une première zone de ladite partie de vision avant **cylindrique** (3a) est définie par un angle alpha1 entre ledit premier point (R) et un second point (Zr) pour l'oeil (E1, E2), ledit second point (Zr) correspondant à un point de la surface externe (10B) du verre (1a) situé au niveau d'une extrémité latérale de la partie de vision avant cylindrique (3a), ledit premier angle **alpha1** étant compris entre 45° et 50° par rapport à un côté dudit plan vertical et une deuxième zone de ladite partie de vision avant **cylindrique** (3a) est définie par un deuxième angle alpha2 entre ledit premier point (R) et les moyens de liaison centraux (2B, 2B') pour l'oeil (E1, E2), ledit angle **alpha2** étant compris entre 10° et 15° par rapport audit plan vertical, ledit angle alpha2 étant défini sur le côté opposé, par rapport audit plan vertical, à celui définissant ledit angle alpha1.

6. Lunettes de natation ou de plongée selon la revendication 1, dans lesquelles la partie de vision **sphérique** latérale (4a) du verre (1a) est définie par une troisième zone ayant un troisième angle **bêta** commençant immédiatement après un point (Zr), ledit point (Zr) correspondant à un point de la surface externe (10B) du verre (1a, 1b) situé au niveau de l'extrémité latérale de la partie de vision avant cylindrique (3a, 3b), et ladite troisième zone se terminant au niveau des moyens de liaison latéraux (2A, 2A') sur ledit verre (1a, 1b) pour l'oeil (E1, E2), ledit angle bêta étant compris entre 10° et 20°.

7. Lunettes de natation ou de plongée selon la revendication 6, dans lesquelles un rayon visuel sortant des yeux (E1, E2) de l'utilisateur et traversant la partie de vision sphérique latérale (4a, 4b) dans un plan horizontal, a un **angle divergent** inférieur ou égal à 5° par rapport à un axe de symétrie verticale des lunettes de natation ou de plongée dans leur ensemble .

8. Lunettes de natation ou de plongée selon la revendication 5, dans lesquelles la partie de vision avant cylindrique (3a) du verre (1a) est **symétrique** à la partie de vision avant cylindrique (3b) du verre (1b).

9. Lunettes de natation ou de plongée selon la revendication 6, dans lesquelles la partie de vision sphérique latérale (4a) du verre (1a) est **symétrique** à la partie de vision sphérique latérale (4b) du verre (1b).

10. Lunettes de natation ou de plongée selon la revendication 1, dans lesquelles la surface interne (10A) et la surface externe (10B) du verre (1a, 1b) ne sont **pas parallèles.**

11. Lunettes de natation ou de plongée définies dans les revendications 1 à 10 **obtenues** selon le procédé comprenant les étapes consistant à :
- doter le verre d'une puissance optique correctrice définie par une variation d'épaisseur sur l'axe horizontal, et
produire une courbure cylindrique/sphérique sur l'axe vertical.

## Patentansprüche

1. Schwimm- oder Taucherbrille für einen Benutzer, umfassend:
- ein Paar symmetrische, nebeneinander befindliche Gläser (1a, 1b), die sich voneinander unterscheiden oder aus einem Stück gebildet sind,
- Kontakteinrichtungen (9), die abdichtend mit den Gläsern (1a, 1b) verbunden und angepasst sind, um wasserdicht auf der Gesichtsfläche, die die Augen (E1, E2) des Benutzers umgibt, aufgebracht zu werden, und wobei die Gläser (1ä, 1b) im Gebrauch dadurch in unmittelbarer Nähe der Gesichtsfläche, die die Augen (E1, E2) des Benutzers umgibt, angeordnet sind;
- seitliche Verbindungseinrichtungen (2A, 2A') und mittlere Verbindungseinrichtungen (2B, 2B') an den Gläsern (1a, 1b), die die Kontakteinrichtungen (9) an den Gläsern (1a, 1b) befestigen;
- wobei die Kontakteinrichtungen (9) durch die seitlichen (2A, 2A') und mittleren (2B, 2B') Verbindungseinrichtungen an den Gläsern (1a, 1b) befestigt sind;
- ein Halteeinrichtung (11) der Brille hinter dem Kopf des Benutzers;
- wobei jedes Glas (1a, 1b) in Bezug auf ein jeweiliges Auge des Benutzers (E1, E2), eine Innenfläche (10A) und eine Außenfläche (10B) aufweist,
- jedes Glas (1a, 1b) in Bezug auf das jeweilige Auge des Benutzers (E1, E2) einen zylindrischen vorderen Sichtabschnitt (3a, 3b) und einen seitlichen sphärischen Sichtabschnitt (4a, 4b) aufweist,
**dadurch gekennzeichnet, dass**
- der zylindrische vordere Sichtbereich (3a, 3b) auf einem horizontalen Querschnitt des Glases (1ä, 1b) eine Stärkenvariation zwischen 2,0 mm und 4,0 mm aufweist, und
- der seitliche sphärische Sichtbereich (4a, 4b) in einem horizontalen Querschnitt des Glases (1a, 1b) eine Stärkenvariation zwischen 2,5 mm und 5,0 mm aufweist, und
- die Gläser (1a, 1b) eine zylindrische Krümmung über einen vertikalen Querschnitt des Glases (1a, 1b) des zylindrischen vorderen Sichtabschnitts (3a, 3b) aufweisen, und
die Gläser (1a, 1b) eine sphärische Krümmung über einen vertikalen Querschnitt des Glases (1a, 1b) des sphärischen seitlichen Sichtabschnitts (4a, 4b) aufweisen.

2. Schwimm- oder Taucherbrille nach Anspruch 1, wobei der vordere zylindrische Sichtabschnitt (3a, 3b) auf dem horizontalen Querschnitt eine Stärkenvariation zwischen 2,0 mm und 3,1 mm aufweist und der seitliche sphärische Sichtabschnitt (4a, 4b) auf dem horizontalen Querschnitt eine Stärkenvariation zwischen 2,5 mm und 4,0 mm aufweist.

3. Schwimm- oder Taucherbrille nach Anspruch 1, wobei der vordere zylindrische Sichtabschnitt (3a, 3b) auf dem horizontalen Querschnitt eine Stärkenvariation zwischen 2,5 mm und 3,1 mm aufweist und der seitliche sphärische Sichtabschnitt (4a, 4b) auf dem horizontalen Querschnitt eine Stärkenvariation zwischen 3,1 mm und 4,0 mm aufweist.

4. Schwimm- oder Taucherbrille nach Anspruch 1, wobei der vordere zylindrische Sichtabschnitt (3a, 3b) auf dem horizontalen Querschnitt eine Stärkenvariation zwischen 3,0 mm und 4,0 mm aufweist und der seitliche sphärische Sichtabschnitt (4a, 4b) auf dem horizontalen Querschnitt eine Stärkenvariation zwischen 4,0 mm und 5,0 mm aufweist.

5. Schwimm- oder Taucherbrille nach Anspruch 1, wobei ein Sehstrahl (Nr) aus einem der Augen (E1, E2) des Benutzers in einer horizontalen Ebene austritt, wobei der Sehstrahl (Nr) in einer vertikalen Ebene senkrecht zu der horizontalen Ebene enthalten ist, der Sehstrahl (Nr) auf die äußere Oberfläche (10B) des Glases (1a) an einem ersten Punkt (R) davon trifft, in dem der Sehstrahl (Nr) senkrecht zu der inneren Oberfläche (10A) des zylindrischen vorderen Sichtabschnitts (3a) des Glases (1a) ist, und ein erster Bereich des zylindrischen vorderen Sichtabschnitts (3a) durch einen Winkel alpha1 zwischen dem ersten Punkt (R) und einem zweiten Punkt (Zr) für das Auge (E1, E2) definiert ist, wobei der zweite Punkt (Zr) einem Punkt auf der Außenfläche (10B) des Glases (1a) entspricht, der sich an einem Seitenende des zylindrischen vorderen Sichtabschnitts (3a) befindet, wobei der erste Winkel alpha1 zwischen 45° und 50° in Bezug auf eine Seite der vertikalen Ebene ist und ein zweiter Bereich des zylindrischen vorderen Sichtabschnitts (3a) durch einen zweiten Winkel alpha2 zwischen dem ersten Punkt (R) und den mittleren Verbindungseinrichtungen (2B, 2B') für das Auge (E1, E2) definiert ist, wobei der Winkel alpha2 zwischen 10° und 15° in Bezug auf die vertikale Ebene ist, wobei der Winkel alpha2 auf der Seite definiert ist, die in Bezug auf die vertikale Ebene der Seite gegenüberliegt, die den Winkel alpha1 definiert.

6. Schwimm- oder Taucherbrille nach Anspruch 1, wobei der seitliche sphärische Sichtabschnitt (4a) des Glases (1a) durch einen dritten Bereich definiert ist, der einen dritten Winkel beta aufweist, der unmittelbar nach einem Punkt (Zr) beginnt, wobei der Punkt (Zr) einem Punkt auf der Außenfläche (10B) des Glases (1a, 1b) entspricht, der sich an dem seitlichen Ende des zylindrischen vorderen Sichtabschnitts (3a, 3b) befindet, und wobei der dritte Bereich an den seitlichen Verbindungseinrichtungen (2A, 2A') an dem Glas (1a, 1b) für das Auge (E1, E2) endet, wobei der Winkel beta zwischen 10° und 20 ist.

7. Schwimm- oder Taucherbrille nach Anspruch 6, wobei ein Sehstrahl, der aus den Augen (E1, E2) des Benutzers austritt und den seitlichen sphärischen Sichtbereich (4a, 4b) in einer horizontalen Ebene durchquert, einen divergenten Winkel von weniger als oder gleich 5° in Bezug auf eine vertikale Symmetrieachse der Schwimm- oder Taucherbrille als Ganzes aufweist.

8. Schwimm- oder Taucherbrille nach Anspruch 5, wobei der zylindrische vordere Sichtabschnitt (3a) des Glases (1a) symmetrisch zu dem zylindrischen vorderen Sichtabschnitt (3b) des Glases (1b) ist.

9. Schwimm- oder Taucherbrille nach Anspruch 6, wobei der seitliche sphärische Sichtabschnitt (4a) des Glases (1a) symmetrisch zu dem seitlichen sphärischen Sichtabschnitt (4b) des Glases (1b) ist.

10. Schwimm- oder Taucherbrille nach Anspruch 1, wobei die Innenfläche (10A) und die Außenfläche (10B) des Glases (1a, 1b) nicht parallel sind.

11. Schwimm- oder Taucherbrille, die in den Ansprüchen 1 bis 10 definiert ist, erlangt nach einem Verfahren, umfassend die Schritte, die aus Folgendem bestehen:
- Ausstatten des Glases mit einer korrigierenden optischen Stärke, die durch eine Veränderung der Stärke auf der horizontalen Achse definiert ist, und
Erzeugen einer zylindrischen/sphärischen Krümmung auf der vertikalen Achse.

## Claims

1. Swimming or diving goggles intended for a user, comprising:
- a pair of symmetrical side-by-side lenses (1a, 1b), distinct from each other or formed in one piece,
- contact means (9) connected in a sealed manner to said lenses (1a, 1b) and able to be applied in a watertight manner to the surface of the face surrounding the eyes of the user (E1, E2) and, during use, said lenses (1a, 1b) thus being placed in the immediate vicinity of the surface of the face surrounding the eyes of the user (E1, E2);
- lateral connecting means (2A, 2A') and central connecting means (2B, 2B') of said lenses (1a, 1b), which fasten said contact means (9) to said lenses (1a, 1b);
- said contact means (9) are fastened to said lenses (1a, 1b) by said lateral connecting means (2A, 2A') and central connecting means (2B, 2B');
- a means of retaining (11) the goggles behind the head of the user;
- each lens (1a, 1b) presents, relative to a respective eye of the user (E1, E2), an inner surface (10A) and an outer surface (10B),
- each lens (1a, 1b) having, relative to the respective eye of the user (E1, E2), a cylindrical front viewing part (3a, 3b) and a spherical lateral viewing part (4a, 4b),
**characterized in that**:
- the cylindrical front viewing part (3a, 3b), on a horizontal cross-section of the lens (1a, 1b), presents a thickness variation between 2.0 mm and 4.0 mm, and
- the spherical lateral viewing part (4a, 4b), on a horizontal cross-section of the lens (1a, 1b), presents a thickness variation between 2.5 mm and 5.0 mm, and
- the lenses (1a, 1b) present a cylindrical curvature on a vertical cross-section of the lens (1a, 1b) of the cylindrical front viewing part (3a, 3b), and
the lenses (1a, 1b) present a spherical curvature on a vertical cross-section of the lens (1a, 1b) of the spherical lateral viewing part (4a, 4b).

2. The swimming or diving goggles according to claim 1, wherein the cylindrical front viewing part (3a, 3b), on the horizontal cross-section, presents a thickness variation between 2.0 mm and 3.1 mm and the spherical lateral viewing part (4a, 4b), on the horizontal cross-section, presents a thickness variation between 2.5 mm and 4.0 mm.

3. The swimming or diving goggles according to claim 1, wherein the cylindrical front viewing part (3a, 3b), on the horizontal cross-section, presents a thickness variation between 2.5 mm and 3.1 mm and the spherical lateral viewing part (4a, 4b), on the horizontal cross-section, presents a thickness variation between 3.1 mm and 4.0 mm.

4. The swimming or diving goggles according to claim 1, wherein the cylindrical front viewing part (3a, 3b), on the horizontal cross-section, presents a thickness variation between 3.0 mm and 4.0 mm and the spherical lateral viewing part (4a, 4b), on the horizontal cross-section, presents a thickness variation between 4.0 mm and 5.0 mm.

5. The swimming or diving goggles according to claim 1, wherein a line of sight (Nr) from one of the eyes of the user (E1, E2) in a horizontal plane, said line of sight (Nr) being contained in a vertical plane perpendicular to said horizontal plane, said line of sight (Nr) strikes the outer surface (10B) of the lens (1a) at a first point (R) thereof at which said line of sight (Nr) is perpendicular to the inner surface (10A) of the front viewing cylindrical part (3a) of the lens (1a), and a first zone of said front viewing cylindrical part (3a) is defined by an angle alpha1 between said first point (R) and a second point (Zr) for the eye (E1, E2), said second point (Zr) corresponding to a point on the outer surface (10B) of the lens (1a) located at a lateral end of the cylindrical front viewing part (3a), said first angle alpha1 being between 45° and 50° relative to one side of said vertical plane and a second zone of said front viewing cylindrical part (3a) is defined by a second angle alpha2 between said first point (R) and the central connecting means (2B, 2B') for the eye (E1, E2), said angle alpha2 being between 10° and 15° relative to said vertical plane, said angle alpha2 being defined on the opposite side, relative to said vertical plane, to that defining said angle alpha1.

6. The swimming or diving goggles according to claim 1, wherein the lateral spherical viewing part (4a) of the lens (1a) is defined by a third zone having a third angle beta starting immediately after a point (Zr), said point (Zr) corresponding to a point on the outer surface (10B) of the lens (1a, 1b) located at the lateral end of the cylindrical front viewing part (3a, 3b), and said third zone ending at the lateral connecting means (2A, 2A') on said lens (1a, 1b) for the eye (E1, E2), said angle beta being between 10° and 20°.

7. The swimming or diving goggles according to claim 6, wherein a line of sight from the eyes of the user (E1, E2) and passing through the lateral spherical viewing part (4a, 4b) in a horizontal plane has a divergent angle less than or equal to 5° relative to a vertical axis of symmetry of the swimming or diving goggles as a whole.

8. The swimming or diving goggles according to claim 5, wherein the cylindrical front viewing part (3a) of the lens (1a) is symmetrical to the cylindrical front viewing part (3b) of the lens (1b).

9. The swimming or diving goggles according to claim 6, wherein the spherical lateral viewing part (4a) of the lens (1a) is symmetrical to the spherical lateral viewing part (4b) of the lens (1b).

10. The swimming or diving goggles according to claim 1, wherein the inner surface (10A) and the outer surface (10B) of the lens (1a, 1b) are not parallel.

11. The swimming or diving goggles defined in claims 1 to 10, obtained according to the method comprising the steps consisting of:
- providing the lens with a corrective optical power defined by a thickness variation on the horizontal axis, and producing a cylindrical/spherical curvature on the vertical axis.
